# EUROPEAN PATENT APPLICATION

(11) **EP 2 433 719 A2**
(43) Date of publication of application: **28.03.2012**
(21) Application number: 11174506.3
(22) Date of filing: 19.07.2011
(51) Int. Cl.: B21C 23/18, B21J 5/02, B21J 5/12, B21K 1/04

(54) **Apparatus for production of bearing housing**

(30) Priority: 27.08.2010 TR 201007210
(71) Applicant: Vestel Beyaz Esya Sanayi ve Ticaret A.S., 45030 Manisa (TR)
(72) Inventor: Ersavas, Mutlu, 35030 Izmir (TR); Dosemeciler, Ozgun, 35540 Izmir (TR)
(74) Representative: Cayli, Hülya

(57) **Abstract**

The apparatus (A) for production of bearing housing used with a press (C) developed by present invention comprises at least one lower element (1), on which there is at least one protrusion (1a) extending in upward direction (in direction of +Y); at least one upper element (2), which comprises at least one housing (2a) extending in downward direction (in direction of -Y), which forms one space (2b) between the protrusion (1 a) and inner wall of the housing (2a) when it is placed in lower element (1); at least one press lead (3), which has such a structure that it can interpenetrate into the housing (2a) and which is fixed to the press (C). The bearing housing (D) used in washing devices can be produced in only one process by means of developed apparatus (A).

## Description

### Technical Field

Present invention relates to apparatus for production of bearing housing for washing devices.

### Prior Art

Washing devices known from state of art comprises at least one bearing, to which one drum axle in the device is fixed. Said bearing ensures that the drum axle is centered within the device and make a rotation movement with low friction. Said bearing is fixed to the device after it is placed in a bearing housing.

In prior art, the bearing housings are produced by the casting method. In said casting method, metal is melted and poured into one casting mold. The metal gets cool and formed in the mold and taken out by opening the mold. Then, the bearing housing is ready for use after it is smoothed over by physical processes.

Various problems are encountered when the bearing housing is produced by casting method. In casting method, it is impossible to produce all partitions, especially its little partitions, of element to be produced. Therefore, it is essential to smooth over the bearing housing physically in order to finalize the process after the production with casting method.

Moreover, in production with the casting method, it is not guaranteed that the metal spreads in the mold homogenously. Therefore, there can be observed voids in the element. These voids decrease metallic resistance of bearing housing. Since the bearing housing is exposed to both perpendicular force and rotational force in the device, inefficient metallic resistance causes the bearing housing to be broken and out of order during device's operation.

Another problem created in production of the bearing housing by casting method is that the housing cannot be produced together with other elements of the device in same ambient since the casting process is carried out in high temperatures and particular conditions. Accordingly, production with casting method requires a separate production facility different from the other productions.

One embodiment for solution to said problems is disclosed in patent document no. EP2083108A1. In said embodiment, cold forging method is applied in production of the bearing housing. In cold forging method, the metal raw material is placed into the mold as cold and then, it is formed by press machines smashing it in the mold. In said embodiment, one metal tube is reduced into the bearing housing after it is exposed to cold forging method with six phases.

In another developed embodiment of patent document no. JP5611538A, a piece of metal placed into a mold is formed by being forged by a press with cylindrical lead and reduced into housing. However in said method, since only one lower mold is used, it is not guaranteed that the metal is reduced into desired form. In addition, in said embodiment, there is press both under side and upper side of the mold and thus, the mold is large in sizes. Moreover the mold is to be supported from its underside by a press and also, upper press is to be changed in order to forge elements with much higher volume and accordingly, lower press is to be changed in order to balance this high force.

### Brief Disclosure of Invention

An apparatus developed by present invention for production of bearing housing for washing devices comprises at least one lower element having at least one extension extending upwardly thereon; at least one upper element, which extends in vertical axis and comprises at least one housing, the upper side and lower side of which is open, which forms space between the extension and inner wall of the housing; at least one press lead compressing the raw material, which has such a structure that it can pass from the upper side to inside of the housing and also placed into the housing.

In developed apparatus, raw material is placed into the housing in the upper element placed on the lower element. Then, the pres lead is fixed to one press and the lower and upper elements are placed under this lead. When the press is operated, the press lead exerts force on the raw material and ensures that the raw material gets the same form with the space between the lower and upper elements. Therefore the bearing housing can be produced in only one process.

### Objective of Invention

An aim of the invention is to develop one apparatus for production of bearing housing.

Another aim of the invention is to develop one apparatus for production of bearing housing which is used with one press.

A further aim of the invention is to develop one apparatus for production of bearing housing which allows production of bearing housing by cold forging method.

Still a further aim of the invention is to develop one apparatus for production of bearing housing which allows the bearing housing to be produced in only one process.

### Description of Figures

The apparatus for production of bearing housing developed by present invention and embodiment examples of bearing housing produced by said apparatus are shown in annexed figures, wherein;
Figure 1 is a sectional view of the apparatus for production of developed bearing housing.
Figure 2 is a sectional view of the upper element placed over the lower element in developed apparatus for production of bearing housing.
Figure 3 is a sectional view of raw material placed in the element in developed apparatus for production of bearing housing.
Figure 4 is a sectional view of one press lead penetrated into the element in developed apparatus for production of bearing housing.

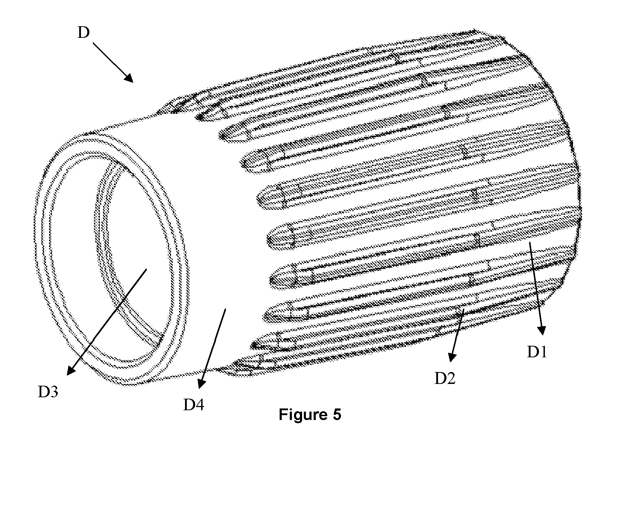

Figure 5 is a perspective view of the bearing housing produced by using the apparatus for production of bearing housing.

All the parts illustrated in figures are individually assigned a reference numeral and the corresponding terms of these numbers are listed below.

| | |
|---|---|
| Apparatus for production | (A) |
| Raw material | (B) |
| Press | (C) |
| Bearing housing | (D) |
| Lower element | (1) |
| Protrusion | (1a) |
| Upper element | (2) |
| Housing | (2a) |
| Space | (2b) |
| Upper side | (2c) |
| Lower side | (2d) |
| Press lead | (3) |
| Bearing recession | (D1) |
| Bearing protrusion | (D2) |
| Inner part | (D3) |
| Outer part | (D4) |

### Disclosure of Invention

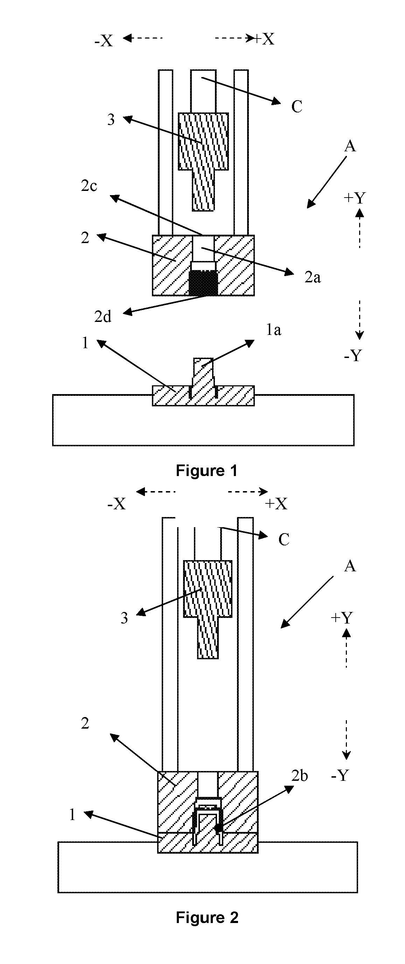

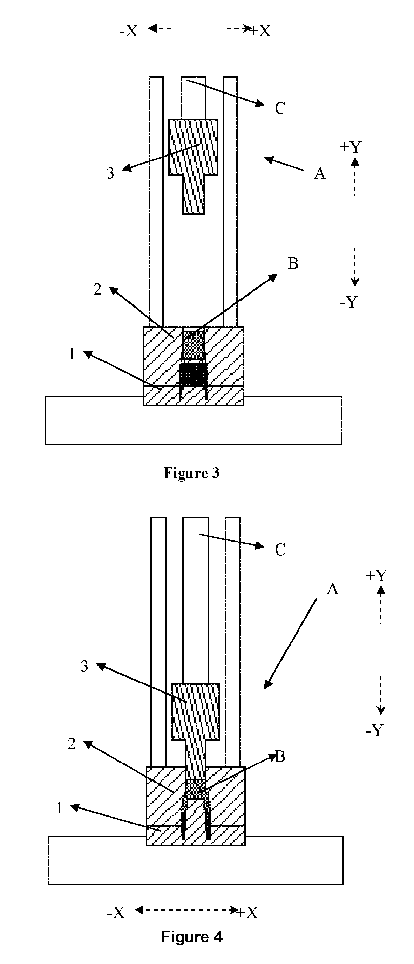

Sectional views of the apparatus (A) for production of bearing housing developed by present invention are illustrated in figures 1-4. The apparatus (A) developed by present invention comprises at least one lower element (1), at least one upper element (2) and at least one press lead (3).

There is provided at least one protrusion (1a) extending in upward direction (in direction of +Y) on the lower element (1) developed by present invention. Said protrusion (1a) gives form to inner part (D3) of the bearing housing (D) during production process. Preferably, on the protrusion (1a), there is at least one recession and/or at least one protrusion extending in perpendicular axis (in direction of +Y/-Y) in accordance with design of bearing housing (D). Therefore, there can be formed protrusions and recessions on inner part (D3) of the bearing housing (D). In one embodiment of the invention, the extension (1 a) can be in such a form that it narrows in upward direction (in direction of +Y).

The upper element (2) in the apparatus (A) for production of bearing housing comprises at least one housing (2a), upper side (2c) and lower side (2d) of which is open and which extends in perpendicular direction (in direction of +Y/-Y). The housing (2a) gives form to outer part of the bearing housing during production process.

The inner diameter of the housing (2a) is bigger than outer diameter of the protrusion (1 a) in the lower element (1). Preferably, in the housing (2a), there is at least one recession and/or at least one protrusion extending in perpendicular axis (in direction of +Y/-Y) in accordance with design of bearing housing (D). Therefore, there can be formed at least one bearing recession (D1) and/or at least one bearing protrusion (D2) on outer surface (D4) of bearing housing (D). In one embodiment of the invention, the housing (2a) can be in such a form that it narrows in upward direction (in direction of +Y).

The pres lead (3) in the system (A) has such a structure that it penetrates into the housing (2a). The diameter of press lead (3) is wide enough to block entrance of the housing (2a) completely when the press lead (3) gets in the housing (2a).

In developed system (A), the lower element (1) is placed onto a floor and the upper element (2) is placed on the lower element (1) so as to ensure that the protrusion (1a) passes into the housing (2a) from under side (2d) of the housing (2a). Since diameter of the housing (2a) is wider than diameter of protrusion (1a), there is formed a space (2b) between the protrusion (1a) and the inner wall of the housing (2a) when the upper element (1) is placed. Then, a raw material (B) is placed into the housing (2). The press lead (3) is fixed to one press (C). As shown in figures, the lower element (1) and upper element (2) are placed under the press lead (3) so as to ensure that the press lead (3) gets in the housing (2a) from upper side (2c). After the press (C) goes down (in direction of -Y), the raw material (B) is pressed into the space (2b) between the protrusion (1 a) and the housing (2a). The raw material (B) is formed by force the press (C) exerts and gets form of space (2b) between the protrusion (1a) and the housing (2a), and thus the bearing housing (D) is produced. When forming process is completed, the upper element (2) leaves from the lower element (1) and the bearing housing produced leaves from the lower element (1).

The system (A) of production of bearing housing ensures that the bearing housing (D) is produced in only one step without need for any extra physical process. In addition, thanks to the system (A), the housing (D) can be produced in the same environment with the other elements, in which the housing (D) is used, without any need for extra production facility.

## Claims

1. An apparatus (A) for production of one bearing housing for washing devices **characterized in that** it comprises,
- at least one lower element (1), on which there is at least one protrusion (1a) extending in upward direction (+Y);
- at least one upper element (2), which extends in perpendicular axis (+Y/- Y), which comprises at least one housing (2a), whose upper side (2c) and lower side (2d) are open, which forms one space (2b) between the protrusion (1a) and inner wall of the housing (2a) when it is placed in lower element (1);
- at least one press lead (3), which has such a structure that it can interpenetrate into the housing (2a) from upper side (2c) of the housing (2a) and presses the raw material placed into the housing (2a) into the formed space (2b).

2. An apparatus (A) for production of one bearing housing according to Claim 1, **characterized in that** it comprises at least one recession on the protrusion (1a) extending in perpendicular axis (+Y/-Y).

3. An apparatus (A) for production of one bearing housing according to Claim 1, **characterized in that** it comprises at least one protrusion extending in perpendicular axis (+Y/-Y) on the protrusion (1 a).

4. An apparatus (A) for production of one bearing housing according to Claim 1, **characterized in that** it comprises at least one recession extending in perpendicular axis (+Y/-Y) in the housing (2a).

5. An apparatus (A) for production of one bearing housing according to Claim 1, **characterized in that** it comprises at least one protrusion extending in perpendicular axis (+Y/-Y) of in the housing (2a).

6. An apparatus (A) for production of one bearing housing according to Claim 1, **characterized in that** the protrusion (1a) is in such a form that it narrows in upward direction (in direction of +Y).

7. An apparatus (A) for production of one bearing housing according to Claim 1, **characterized in that** the housing (2a) is in such a form that it broadens in upward direction (in direction of +Y).
